# EUROPEAN PATENT APPLICATION

(11) **EP 1 172 749 A2**
(43) Date of publication of application: **16.01.2002**
(21) Application number: 01304522.4
(22) Date of filing: 23.05.2001
(51) Int. Cl.: G06F 17/60

(54) **Method and system for comprehensive management of chemical materials**

(30) Priority: 09.06.2000 JP 2000179368
(71) Applicant: Hitachi Ltd., Tokyo (JP)
(72) Inventor: Ohishi, Satoshi, Hitachi-shi, Ibaraki 316-0006 (JP); Ichikawa, Yoshiaki, Ibaraki 319-1114 (JP)
(74) Representative: Calderbank, Thomas Roger

(57) **Abstract**

The present invention provides a method and system for management of chemical materials by a company comprising providing a first data set containing which substances comprise the materials, providing a second data set containing which of the substances are to be controlled, providing a third data set containing a ratio of discharge of the controlled substances in a process and analyzing a preset amount of the materials in the process and determining a quantity of the controlled substances utilizing the first and second data set and determining an emissions quantity of the controlled substances utilizing the ratio and the quantity of the controlled substances, wherein the data sets are provided by an outsource company through a network.

## Description

The present invention relates to a method and system for comprehensive management of chemical materials, in particular, a method and system for comprehensive management of chemical materials utilizing a networked database provided by outsource companies.

Currently, a large variety of chemical materials are on the market containing hundreds of chemical substances. These chemical substances that are discharged into the atmosphere, soil, and water during the process of production, distribution, and storage of certain chemical substances are hazardous to the environment. Further, chemical substances that are contained in and transferred together with final products or in wastes that are discarded can be hazardous to the environment as well (the amount of chemical substances discharged and transferred are referred to as "amount discharged and transferred" hereinafter).

Therefore, companies (enterprises) which handle these chemical materials are required by law to report to the state or local public entities quantitative data regarding discharge and transfer of certain hazardous substances in their factories and premises. This requirement is intended to estimate the total environmental load throughout the country. Therefore, companies are required to manage the chemical substances they independently handle (those chemical substances which are managed or controlled by companies are referred to as "substances under control" hereinafter).

Conventionally, a system for management of chemical materials are maintained by individual companies. In other words, individual companies investigate every material and product introduced into individual production processes and calculated the emission factor at every point of discharge and transfer of the chemical substance for each production process. This is a very expensive, tedious and time-consuming process. Consequently, the integrity of the database is often lacking and results in an inaccurate accounting of the substances that are discharged and transferred.

The present invention provides a method and system for the comprehensive management of chemical materials wherein databases utilized in the management of chemical materials are maintained by an outsource company and accessed by companies via a network. Additionally, the outsource company can perform the necessary processing of the data as well.

In an object of the present invention a method for management of chemical materials by a company is provided comprising the steps of providing a first data set containing which substances comprise the materials, providing a second data set containing which of the substances are to be controlled and providing a third data set containing a ratio of discharge of the controlled substances in a process. The method further provides analyzing a preset amount of the materials in the process and determining a quantity of the controlled substances utilizing the first and second data set and determining an emissions quantity of the controlled substances utilizing the ratio and the quantity of the controlled substances, wherein the data sets are provided by an outsource company through a network.

In another object of the present invention a method for management of chemical materials by a company is provided comprising the steps of providing a first data set containing which substances comprise the materials, providing a second data set containing which of the substances are to be controlled and providing a third data set containing a ratio of discharge of the controlled substances in a process. The method further provides analyzing a preset amount of the materials in the process and determining a quantity of the controlled substances utilizing the first and second data set by an outsource company and determining an emissions quantity of the controlled substances utilizing the ratio and the quantity of the controlled substances by the outsource company, wherein the data sets are provided by the outsource company through a network.

In yet another object of the present invention a method for management of chemical materials by a company is provided comprising the steps of providing a first data set containing which substances comprise the materials, providing a second data set containing which of the substances are to be controlled, providing a third data set containing a ratio of discharge of the controlled substances in a process and providing a fourth data set containing handling precautions, hazards and legal regulations for the materials. The method further comprises analyzing a preset amount of the materials in the process and determining a quantity of the controlled substances utilizing the first and second data set by an outsource company, determining an emissions quantity of the controlled substances utilizing the ratio and the quantity of the controlled substances by the outsource company, wherein the data sets are provided by the outsource company through a network.

In another object of the present invention a system for management of chemical materials discharged by a company is provided comprising, a server, comprising a first data set containing which substances comprise the materials, a second data set containing which of the substances are to be controlled, the substances being categorized by a group control number, a third data set containing a ratio of discharge of the controlled substances in a process. The server is in communication with a processor, the processor being programmed to analyze a preset amount of the materials in the process and determine a quantity of the controlled substances utilizing the first and second data sets and determine an emissions quantity of the controlled substances utilizing the ratio and the quantity of the controlled substances, wherein the data sets in the server are provided by an outsource company through a network.

In another object of the present invention a system for management of chemical materials discharged by a company is provided comprising, a server, comprising a first data set containing which substances comprise the materials, a second data set containing which of the substances are to be controlled, the substances being categorized by a group control number and a third data set containing a ratio of discharge of the controlled substances in a process. The server is in communication with a processor, the processor being programmed by an outsource company to analyze a preset amount of the materials in the process and determine a quantity of the controlled substances utilizing the first and second data sets and determine an emissions quantity of the controlled substances utilizing the ratio and the quantity of the controlled substances, wherein the data sets in the server are provided by an outsource company through a network.

In yet another object of the present invention a system for management of chemical materials discharged by a company is provided comprising, a server, comprising a first data set containing which substances comprise the materials, a second data set containing which of the substances are to be controlled, the substances being categorized by a group control number, a third data set containing a ratio of discharge of the controlled substances in a process and a fourth data set containing handling precautions, hazards and legal regulations for the materials. The server is in communication with a processor, the processor being programmed by an outsource company to analyze a preset amount of the materials in the process and determine a quantity of the controlled substances utilizing the first and second data sets and determine an emissions quantity of the controlled substances utilizing the ratio and the quantity of the controlled substances, wherein the data sets in the server are provided by an outsource company through a network.

In another object of the present invention a method for management of chemical materials by a company is provided comprising the steps of providing a first data set containing substances which comprise the materials and providing a second data set containing substances which are to be controlled. Further, the method provides the step of providing a third data set containing a ratio of discharge of the controlled substances in a process, wherein the ratio is maintained on an apparatus used in the process. Also, the method includes the step of analyzing a preset amount of the materials in the process and determining a quantity of the controlled substances utilizing the first and second data set and determining an emissions quantity of the controlled substances utilizing the ratio and the quantity of the controlled substances.

The above advantages and features of the invention will be more clearly understood from the following detailed description which is provided in connection with the accompanying drawings.
Fig. 1 is a diagram showing the entire construction of the system for comprehensive management of chemical substances in one embodiment of the present invention;
Fig. 2 is an Example of the data structure of each database in an embodiment of the present invention;
Fig. 3 is a conceptual diagram to illustrate ESD;
Fig. 4 is a concrete example of ESD;
Fig. 5 is a schematic diagram showing the relation between ESD for each apparatus and the production process;
Fig. 6 is a system diagram showing how individual databases are contained separately in the system of comprehensive management of chemical substances in one embodiment of the present invention shown in Fig. 1;
Fig. 7 is a business form to offer information to the chemical substance control company;
Fig. 8 is a flow diagram executing the business form shown in Fig. 7;
Fig. 9 is a diagram of the system to execute the business form to offer various services to the chemical substance control company;
Fig. 10 is a diagram of the system to execute the business form to offer various services to the chemical substance control company;
Fig. 11 is a flow of executing the business form to offer databases (without filtering of information exhibit);
Fig. 12 is a flow of executing the business form to offer databases (with filtering of information exhibit);
Fig. 13 is a flow of executing the business form to offer the green acquisition information;
Fig. 14 is a flow of executing the business form to offer information about new products and new apparatuses (advertisement and publicity);
Fig. 15 is a flow of vicarious execution of chemical substance management;
Fig. 16 is a flow of executing the business form to monitor the process state;
Fig. 17 is a flow of executing the business form to issue alarm; and
Fig. 18 is a flow of executing the business form to retrieve product information.

Exemplary embodiment of the present invention will be described below in connection with the drawings. Other embodiments may be utilized and structural or logical changes may be made without departing from the spirit or scope of the present invention. For instance, any reference to network should be understood to include a wide area network, including, the internet. Like items are referred to by like reference numerals throughout the drawings.

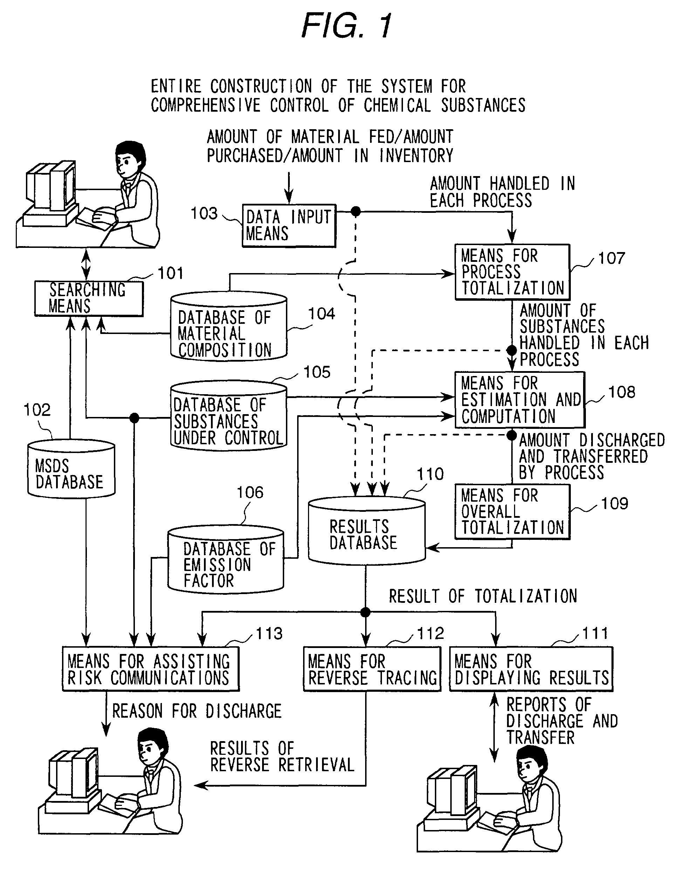

Referring now to the drawings, Fig. 1 is a diagram showing the entire construction of the system for comprehensive management of chemical substances in one embodiment of the present invention. The MSDS database 102 is a collection of Material Safety Data Sheets (MSDS) describing handling precautions, hazardousness, and legal regulations for individual materials and products. The term "materials" means any raw material which is made into finished products or which is used for production of finished products, the former including unprocessed products (such as ores and crude oil), primary products (such as steel sheets), and semifinished products (such as substrates), and the latter including coating agents, detergents, paints, and coolants. The term "finished products" means any product which is shipped as manufactured goods by companies. Their examples include automobiles, cameras, personal computers, films, TV sets, CPUs, boards, cables, clothing, foods, buildings, electricity, water, etc.

The database of material composition 104 is a collection of data concerning compositions of materials. Any one material is usually composed of a plurality of substances. Any substance is identified by a Chemical Abstracts Service (CAS) registry number. The records in the database of material composition 104 is organized such that each field contains the name of material, the identifier of chemical substance contained in the material, and the upper and lower limits of the composition (%) of the chemical substance.

The database of substances under control 105 is a list of the substances under control which affect environment or need control. It stores records each containing as fields the type of substances under control (such as poisonous substances, deleterious substances, objects of control, substances designated by regulations, and substances under self-posed control) and the identifier of such substances under control. Moreover, it also stores records each containing as fields the identifier and physical properties of the substances under control. The physical properties include factors for conversion from molecular weight into pure metal mass and values of vapor pressure, density, etc. These substances include those which are covered by the PRTR regulation.

The database of emission factor 106 stores records each containing as fields the chemical substance at each point of discharge and transfer (such as atmosphere, waters, soil, consumption, disposal by contract, recycling, and production) and the amount of discharge and transfer of the chemical substances (in terms of ratio by weight) constituting the material or product introduced ("fed") into individual processes. An example of such data is the fact that 80% of toluene (as one component of paint A) is discharged into the atmosphere in the coating process of a certain production line.

The searching means 101 retrieves necessary data from records in the above-mentioned databases by means of fields relating to one another or by means of the CAS registry number. It also retrieves necessary data from texts in the field by means of partial match and outputs the retrieved result to the display or file.

The result database 110 stores those records which are utilized or generated by individual means of the system and also stores records produced as a result. The corresponding information is also the database to be stored. The result display means 111 retrieves and reads the contents of the result database and displays various totalized results.

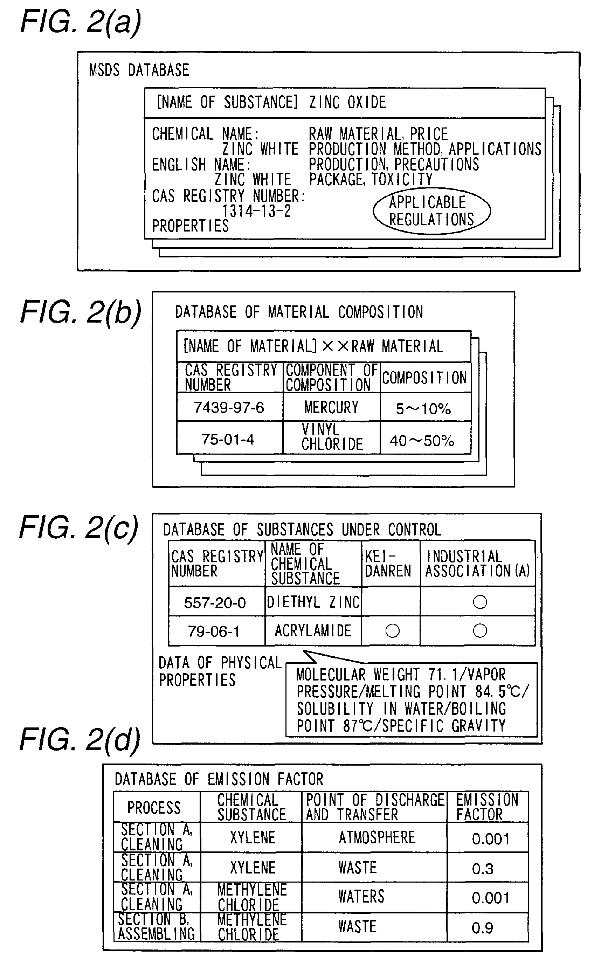

Fig. 2 is a diagram showing an example of data structure of each database in the system for comprehensive management of chemical substances in one embodiment of the present invention. Fig. 2(a) shows an example of data structure of MSDS database. This database stores, using the name of the chemical substance as the key index, information about product safety such as handling precautions, toxicity, and applicable regulations.

Fig. 2(b) shows an example of data structure of the database of material composition. This database stores, using the name of the material as the key index, the identifier of the constituent substances such as CAS registry number, the name of chemical substance of components, and the upper and lower limits of the composition. The name of the material is the commercial name on the market or the product number assigned at the time of purchase by the companyr.

Fig. 2(c) shows an example of data structure of the database of substance control. This database stores, using the identifier of chemical substance such as CAS registry number as the key index, the name of chemical substance, information about the association by which the chemical substance is designated, and data of physical properties.

Fig. 2(d) shows an example of data structure of the database of emission factor. This database stores, using the name of process as the key index, the substance introduced, the point of discharge and transfer, and the emission factor, which is the ratio (by weight) of the amount of chemical substances discharged to the amount of chemical substances introduced.

Note, the data stored in the database of emission factor is prepared in the form of emission factor data from the data of ratio (by weight) of the chemical substance at the point of discharge and transfer of the chemical substance introduced for each chemical substance constituting the material or product introduced into each process. In order to prepare each data, research is conducted for each material or product introduced into each process and the emission factor at each point of discharge and transfer of the chemical substance for each process is expressed in numeral.

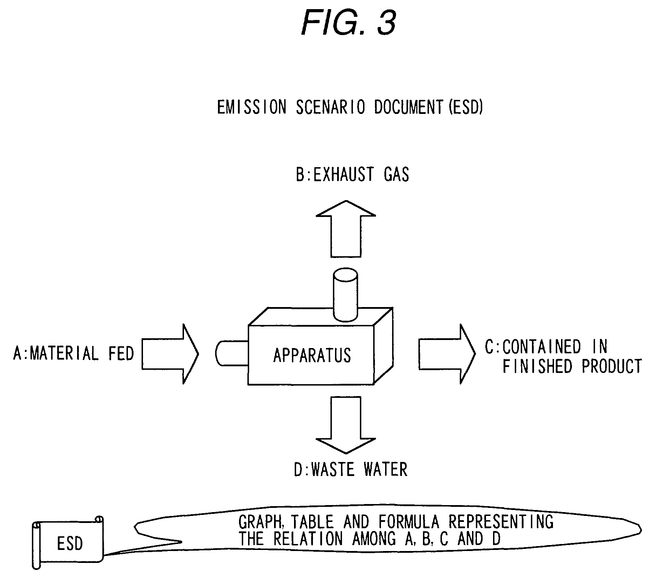

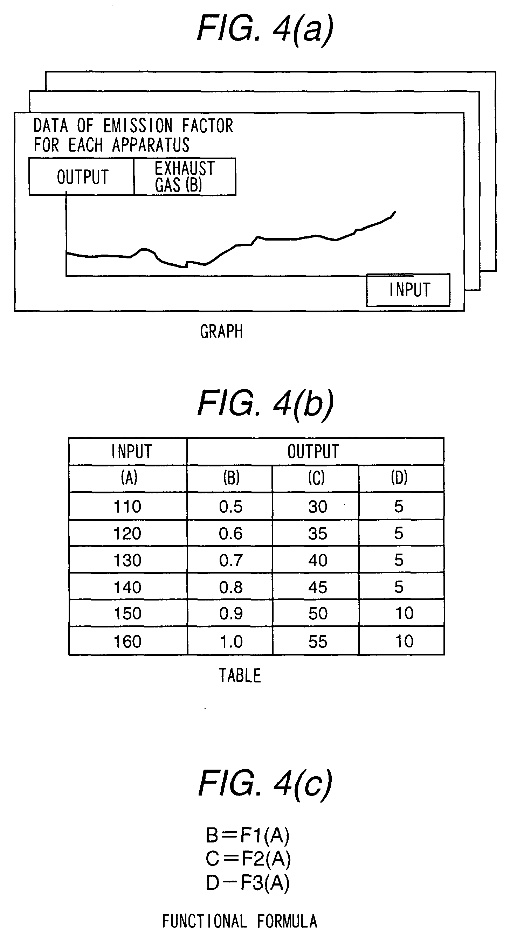

According to one embodiment of the present invention, the emission scenario document (ESD), which is explained with reference to Figs. 3 and 4, is contained in the emission factor database, so that the control of chemical substances is carried out.

Fig. 3 is a diagram to explain the concept of ESD. In the case where a single apparatus is used or specific apparatus are used in combination and a material (A) is introduced (INPUT) into the apparatus, then it is assumed that part of the material is discharged (OUTPUT) as exhaust gas (B), moved into the product (C), and discharged into drain (D). ESD represents the relation between the INPUT and the OUTPUT in terms of graph, table, or functional formula. This information can be used as the emission factor in the production process in a single apparatus or a combination of apparatus as a whole. In other words, a data set containing a ratio of discharge of the controlled substances in a process is provided wherein the ratio is maintained on an apparatus used in the process.

Fig. 4 shows a concrete example of ESD. Fig. 4(a) is a graphical representation, Fig. 4(b) is a tabular representation, and Fig. 4(c) is a functional representation.

The graph shown in Fig. 4(a) represents the relation between the amount (INPUT) of the material introduced into the apparatus and the amount (OUTPUT) discharged to each point of discharge and transfer. This graph shows the relation between the amount (INPUT) of the material introduced and the amount (OUTPUT) of discharge at point of discharge (exhaust gas (B)). If there is any other point of discharge and transfer (e.g., atmosphere and waste) for the apparatus, the graph shows the relation between the amount (INPUT) introduced and the amount (OUTPUT) of discharge.

The table shown in Fig. 4(b) represents the relation between the amount (INPUT) of the material introduced into the apparatus and the amount (OUTPUT) discharged to each point of discharge and transfer. This formula shows the relation between the amount (INPUT) of (A) the material introduced and the amount (OUTPUT) of discharge at points (B), (C), and (D) of discharge and transfer.

The functional formula shown in Fig. 4(c) represents the relation between the amount (INPUT) of the material introduced into the apparatus and the amount (OUTPUT) discharged at each point of discharge and transfer. This formula shows the relation between the amount (INPUT) of (A) the material introduced and the amount (OUTPUT) of discharge at points (B), (C), and (D) of discharge and transfer. Note, the above-mentioned ESD represents the discharge characteristics in the case where apparatus are used individually or represents the discharge characteristics of combined apparatus as a whole in the case where the apparatus is used in combination with other apparatus.

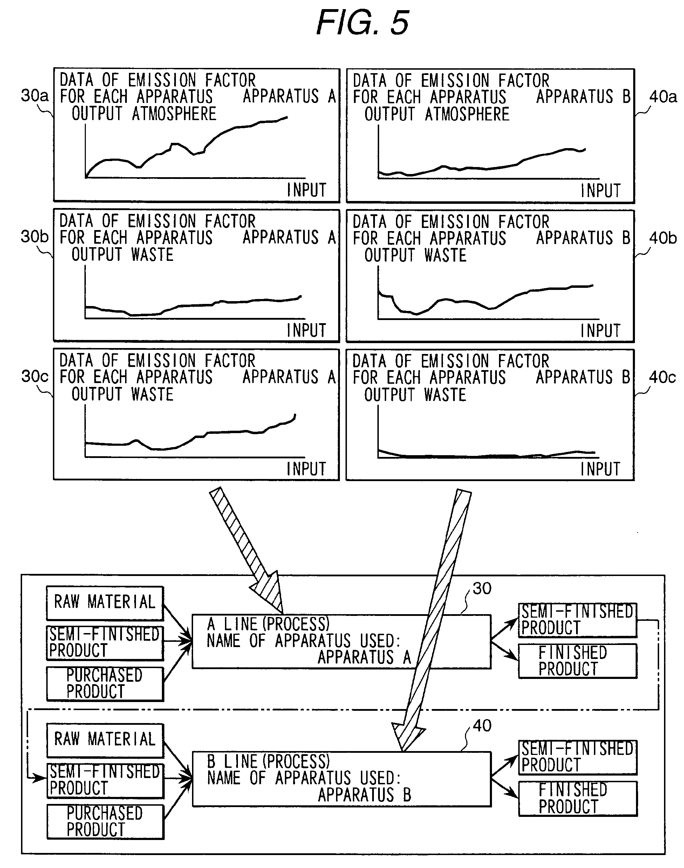

Fig. 5 is a schematic diagram showing the relation between the ESD of individual apparatus and the production process. This production process consists of A line 30 and B line 40. When A line is charged with a raw material, semifinished product, or purchased material individually or in combination, then there are obtained the emission factor data 30a, 30b, and 30c for each apparatus. 30a represents the emission factor in the case where the point of discharge and transfer is waters. 30b represent the emission factor in the case where the point of discharge and transfer is waste. 30c represents the emission factor in the case where the point of discharge and transfer is water. Likewise, when B line 40 is charged with a semifinished product (produced by A line), a new raw material, or a new purchased material individually or in combination, then there are obtained the emission factor data 40a, 40b, and 40c for each apparatus. 40a represents the emission factor in the case where the point of discharge and transfer is water. 40b represent the emission factor in the case where the point of discharge and transfer is waste. 40c represents the emission factor in the case where the point of discharge and transfer is water.

The obtained emission factor for individual apparatus is stored in the emission factor database 106 of the system for comprehensive management of chemical substances in one embodiment of the present invention. The database is used to calculate the amount of discharge at the point of discharge and transfer of the chemical substance discharged from the raw material, semifinished product, and purchased product which have been introduced into the production process.

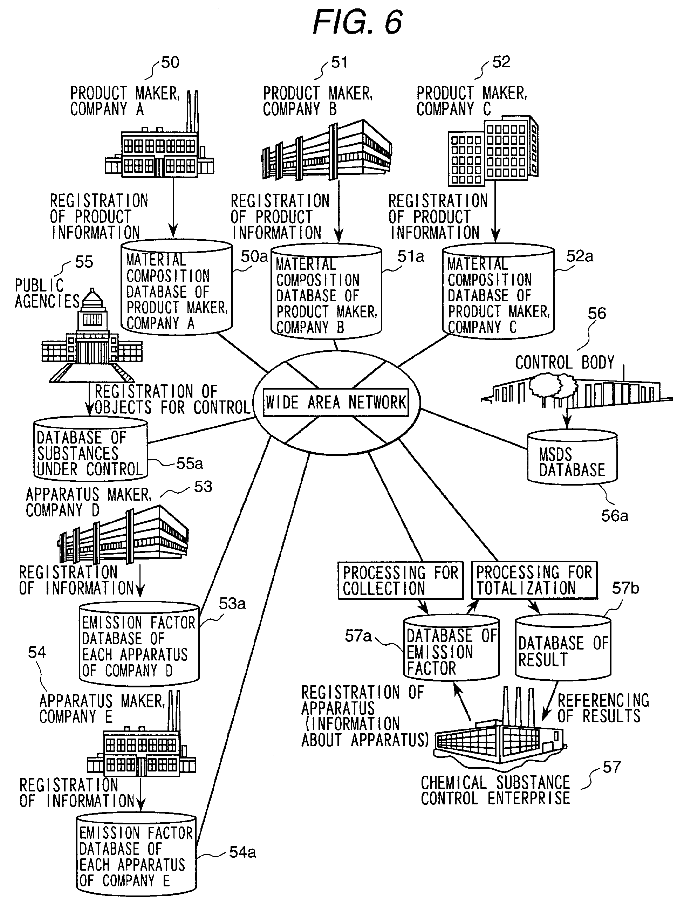

Fig. 6 shows the dispersed databases maintained by the system for comprehensive management of chemical substances in one embodiment of the present invention shown in Fig. 1. The product maker (company A) 50 maintains the material composition database 50a of company A which contains the identifier, the name, and the upper and lower limits of the chemical substance contained in the product for the chemical substances constituting the product produced by company A.

Likewise, the product maker (company B) 51 maintains the material composition database 51a of company B which contains the identifier, the name, and the upper and lower limits of the chemical substance contained in the product for the chemical substances constituting the product produced by company B. The product maker (company C) 52 maintains the material composition database 52a of company C which contains the identifier, the name, and the upper and lower limits of the chemical substance contained in the product for the chemical substances constituting the product produced by company C.

The apparatus maker (company D) 53 maintains the emission factor database 53a for individual apparatus of company D which stores information containing ESD shown in Figs. 3 to 5 for each apparatus produced by company D.

Likewise, the apparatus maker (company E) 54 maintains the emission factor database 54a for individual apparatus of company E which stores information containing ESD shown for each apparatus produced by company E.

The database of substances under control 55a maintained by public agencies 55 stores databases listing the chemical substances which affect the environment and the chemical substances which public agencies 55 designate as those which need control.

In addition, the MSDS database 56b maintained by the control body 56 contains data (in the form of database for each material and product) showing handling precautions and harmfulness of the material (called product safety information sheet) and the items applicable to regulations.

A provision is made that permits access through a wide area network to the material composition database 50a of company A, the material composition database 51a of company B, the material composition database 52a of company C, the emission factor database 53a for individual apparatus of company D, the database of substances under control 55a maintained by public agencies, and the MSDS database 56b maintained by the control body.

The chemical substance control company 57 collects, through the wide area network, information about the emission factor data concerning the apparatus installed for its own production process, and processes the collected information and stores the processed results in its own emission factor database 57a. The chemical substance control company 57 collects, through the wide area network, information about the composition of the material or product introduced into the apparatus installed for the production process, and processes the collected information, and identifies whether or not the chemical substances constituting the material or product correspond to the chemical substances whose control is required by public agencies by means of the database of substances under control 55 maintained by the public agencies. The chemical substance control company 57 calculates and totalizes the amount of the chemical substances discharged at the point of discharge and transfer according to the amount introduced of the identified chemical substance.

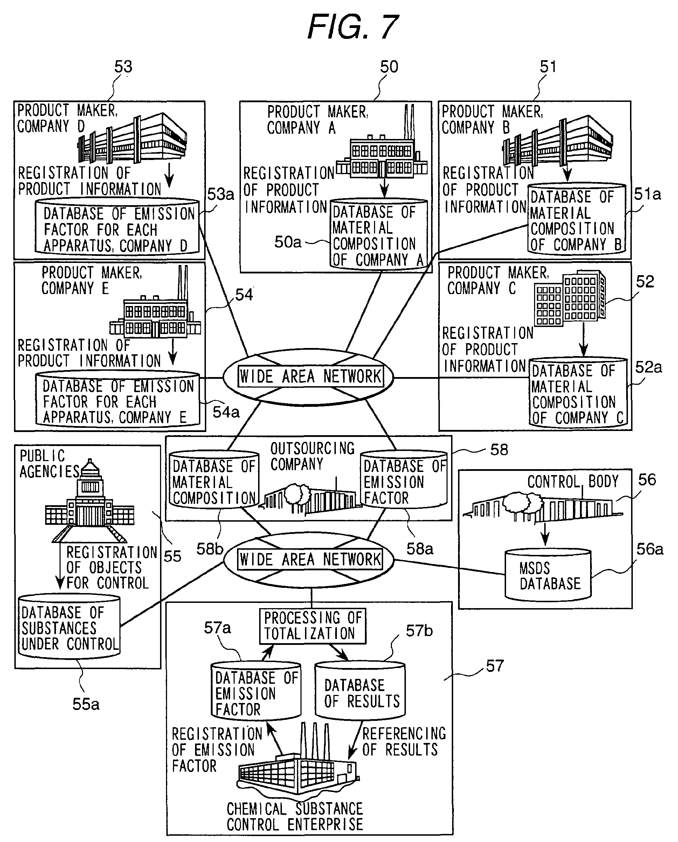

Fig. 7 shows the business to store data and offer the data to the chemical substance control company 57. The data includes the material composition database 50a of company A, the material composition database 51a of company B, the material composition database 52a of company C, the emission factor database 53a for individual apparatus of company D, and the emission factor database 54a for individual apparatus of company E, explained in Fig. 6, which are stored in the material composition database 58a and the emission factor database 58b maintained ("possessed") by the outsourcing company 58.

The outsourcing company 58 collects, through the wide area network, the material composition database 50a of company A, the material composition database 51a of company B, the material composition database 52a of company C, the emission factor database 53a for individual apparatus of company D, and the emission factor database 54a for individual apparatus of company E. And the outsourcing company 58 provides the material composition database 58a and the emission factor database 58b which it maintains for the chemical substance control company 57 through the wide area network.

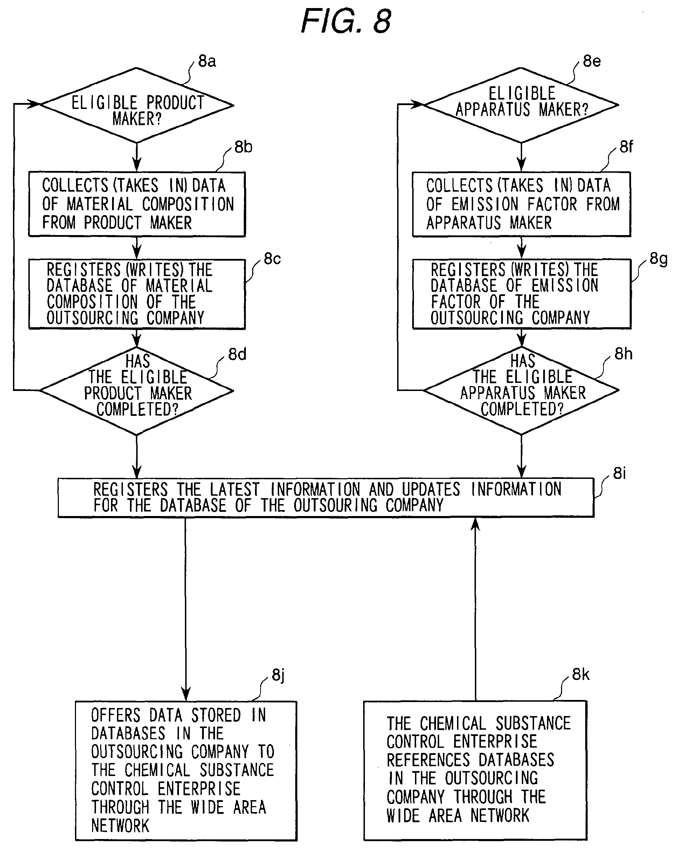

Fig. 8 is a flow diagram for the business shown in Fig. 7. When the outsourcing company 58 collects data to be stored in the material composition database 58a, it judges whether or not the product maker is the eligible product maker (8a). If so, it collects the material composition data from the product maker (8b). Then, the data is registered with the material composition database 58a maintained by the outsourcing company 58 (8c). Judgment is made on whether or not the collection of data from the eligible product maker is complete (8d). This process is repeated for other eligible product makers. This procedure is followed in the case where the material composition database is updated.

When the outsourcing company collects data to be stored in the emission factor database, it judges whether or not the apparatus maker is the eligible apparatus maker. (8e) If so, it collects the emission factor data from the apparatus maker. (8f) Then, the data is registered with the emission factor database maintained by the outsourcing company. (8g) Judgment is made on whether or not the collection of data from the eligible apparatus maker is complete. (8h) This process is repeated for other eligible apparatus makers. This procedure is followed in the case where the emission factor database is updated.

The outsourcing company completes the registration and updating of the latest database information. Then, the outsourcing company provides the data stored in the material composition database and the emission factor database to the chemical substance control company through the wide area network (8j). Alternatively, the chemical substance control company references the various databases maintained by the outsourcing company through the wide area network.

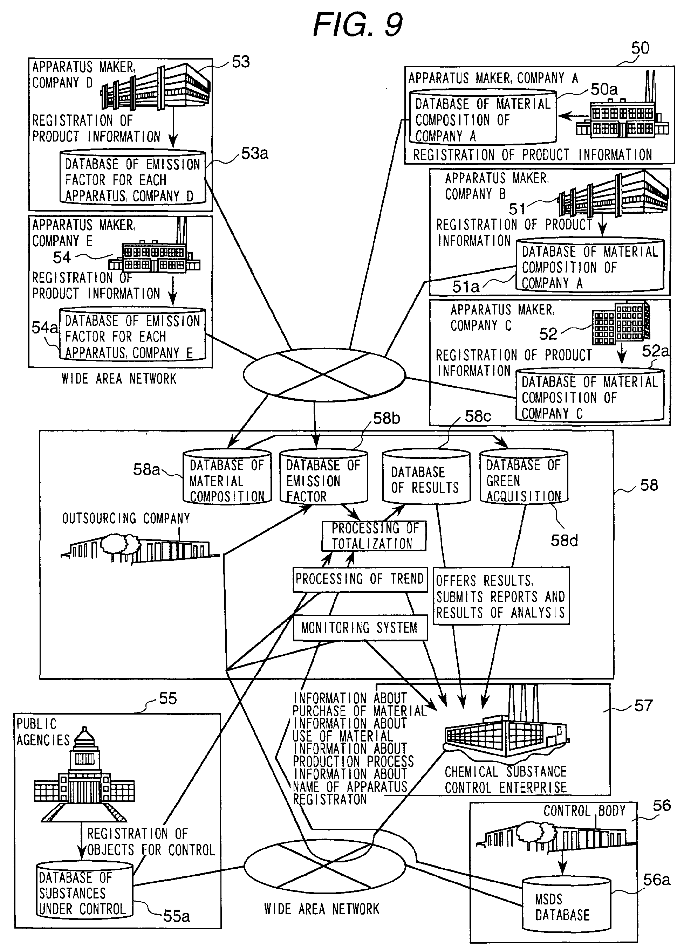

Fig. 9 shows a system by which the outsourcing company 58 carries out the business to store data and offer various services to the chemical substance control company 57 by utilizing such data. The data include the material composition database 50a of company A, the material composition database 51a of company B, the material composition database 52a of company C, the emission factor database 53a for individual apparatus of company D, and the emission factor database 54a for individual apparatus of company E, explained in Fig. 6, which are stored in the material composition database 58a and the emission factor database 58b maintained by the outsourcing company 58.

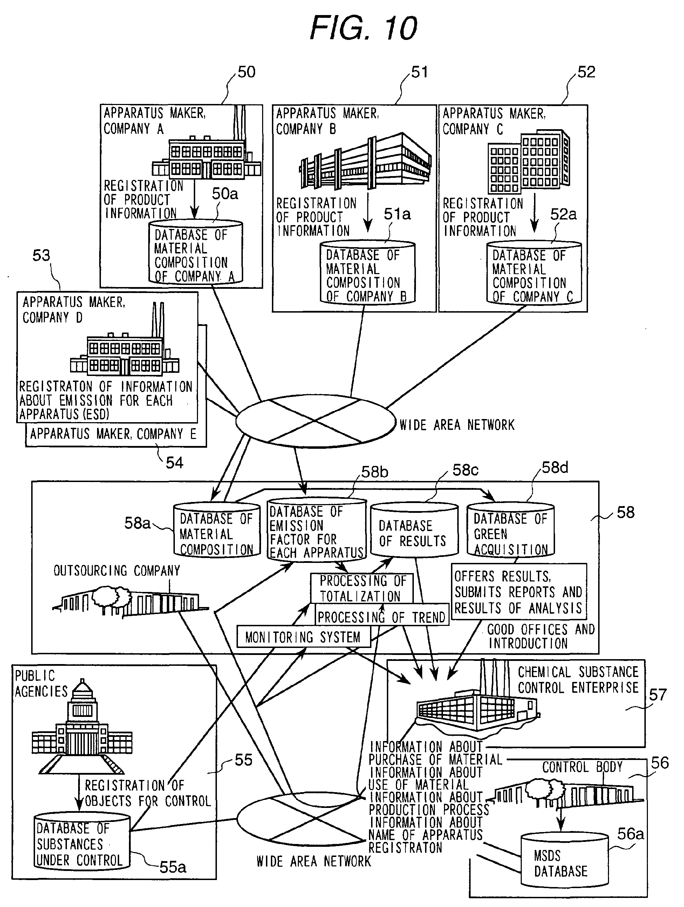

Fig. 10 shows the same system as shown in Fig. 9, except that the emission factor database 53a for individual apparatus of company D and the emission factor database 54a for individual apparatus of company E are replaced respectively by the emission scenario document (ESD) information for the apparatus of company D and the emission scenario document (ESD) information for the apparatus of company E.

In the system shown in Fig. 9, the outsourcing company 58 maintains the material composition database 58a and the emission factor database 58b and collects, through the wide area network, the material composition database 50a maintained by the product maker company A 50, the material composition database 51a maintained by the product maker company B 51, the material composition database 52a of the product maker company C 52, the emission factor database 53a for individual apparatus maintains by the apparatus maker company D 53, and the emission factor database 54a for individual apparatus maintained by company E 54.

Alternatively, the emission scenario document (ESD) information for each apparatus is stored in the emission factor database 53a for individual apparatus maintained by the apparatus maker company D and the emission factor database 54a for individual apparatus maintained by the apparatus maker company E. This ESD is stored in the emission factor database 58b maintained by the outsourcing company 58.

The outsourcing company 58 maintains the result database 58c so that it can carry out the chemical substance control business which has been carried out by the chemical substance control company 57 in the past. In this way it is possible for the outsourcing company to do totalizing work and report making for chemical substance control if the chemical substance control company 57 registers (or exhibits) information about the name of the apparatus (model and any other information for identification) and information about the combination of the apparatus used for its own production process, information about material purchase, and information about the use of materials.

The outsourcing company 58 utilizes the material composition data 58a, thereby preparing the green acquisition information which serves as a guide of material purchase for the chemical substance control company 57, and then stores this information in the green acquisition database and provides it to the chemical substance control company 57. This permits the chemical substance control company 57 to easily search for the material which has no effect on the environment when it purchases raw materials. This helps to reduce chemical substances and acquire substitutes.

The outsourcing company 58 maintains information about the discharge of chemical substances for each apparatus and provides this information to the chemical substance control company. This information is useful to select apparatus at the time of their replacement. This permits the chemical substance control company 57 to select an efficient apparatus which emits less chemical substances. The fact that the third party (e.g., the outsourcing company) provides information about the replacement of apparatus allows the introduction and advertisement of the apparatus.

The system shown in Figs. 9 and 10 achieves an object of the invention as explained in the following.

### (1) To offer database (without filtering of information exhibit)

The material composition database is an indispensable information for the system of comprehensive management of chemical substances in one embodiment of the present invention shown in Fig. 1. However, the material composition information stored in the material composition database is known only to the maker who produces the specific product. In other words, it remains secret unless it is made open to the public. The user of the product (or the chemical substance control company) has to search for the material composition information of the product by means of the product name or maker name as a clue. There are several means of search, such as precautions and documents attached to the product, telephone inquiry to the maker, and information collection through a communication media such as the internet.

The foregoing is applied to the apparatus produced by the apparatus maker. The emission factor for each apparatus indicating the characteristic properties and capability of the apparatus has the same character as the above-mentioned material composition information.

The outsourcing company gets information about the material composition of the products sold by a plurality of product makers and compiles the thus obtained information into a database. The outsourcing company also gets information about the emission factor of the apparatus sold by a plurality of apparatus makers and compiles the thus obtained information into a database.

Also, the outsourcing company gets information about the database of substances under control which is offered by public agencies and information about the MSDS database which is offered by the control body. Then, the outsourcing company makes the thus obtained information, together with the above-mentioned material composition information and the emission factor information, open to the chemical substance control company.

The advantage of the foregoing is that the chemical substance control company does not have to collect in various ways information about the material composition of the products which it purchases and information about the emission factor of the apparatus which it uses.

The business in this service consists of the chemical substance control company (A), the outsourcing company (B), and the product/apparatus maker (C). The chemical substance control company (A) simply accesses the database of the outsourcing company (B) in order to collect necessary information, and the chemical substance control company (A) pays for this service to the outsourcing company (B). The product/apparatus maker (C) receives part of the value paid for service to the outsourcing company (B) from the chemical substance control company (A), so that it actively opens the product information to the public, thereby obtaining income from information publicity. In this way all of the chemical substance control company (A), the outsourcing company (B), and the product/ apparatus maker (C) get benefits for business.

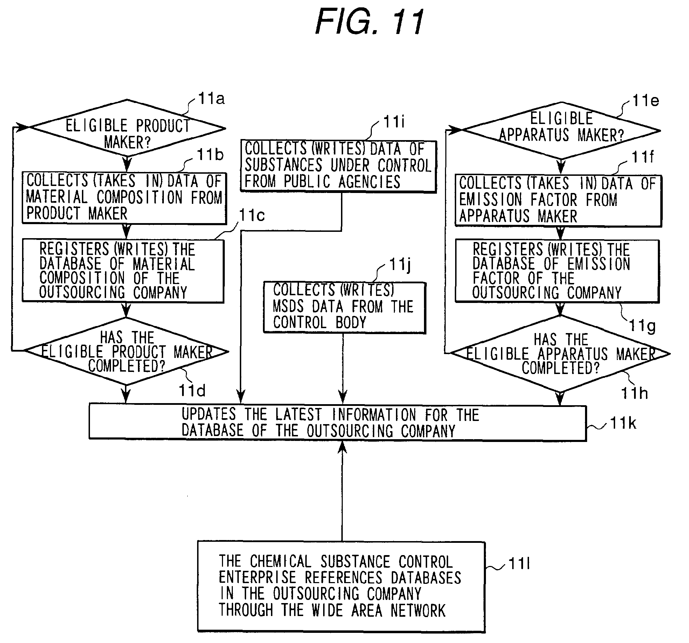

Fig. 11 is a flow diagram of the business of offering databases (without filtering of information exhibit). When the outsourcing company 58 collects data to be stored in the material composition database 58a, it judges whether or not the product maker is the eligible product maker (11a). If so, it collects the material composition data from the product maker (11b). Then, the data is registered with the material composition database 58a maintained by the outsourcing company (11c). Judgment is made on whether or not the collection of data from the eligible product maker is complete. (11d) This process is repeated for other eligible product makers. This procedure is followed where the material composition database is updated.

When the outsourcing company collects data to be stored in the emission factor database 58b, it judges whether or not the apparatus maker is the eligible apparatus maker (11e). If so, it collects the emission factor data (together with ESD) from the apparatus maker (11f). Then, the data is registered with the emission factor database 58b maintained by the outsourcing company (11g). Judgment is made on whether or not the collection of data from the eligible apparatus maker is complete (11h). This process is repeated for other eligible apparatus makers. This procedure is followed in the case where the emission factor database is updated. The outsourcing compound also collects data of substances under control from public agencies (11i). In addition, the outsourcing company collects MSDS data from the control body 56 (11j). The information of the database maintained by the outsourcing company is updated at mentioned above (11k). Then, the chemical substance control company 57 references, through the wide area network, the various databases maintained by the outsourcing company.

### (2) To offer database (with filtering of information exhibit)

According to the above-mentioned procedure (1), the information disclosed by the product maker and apparatus maker is compiled into a database and the chemical substance control company references this database, thereby searching for information required by the chemical substance control company. This procedure may be modified such that the outsourcing company previously searches in the database for information required by the chemical substance control company and provides only the selected information to the chemical substance control company.

If the material purchase list or the material order information is available beforehand from the chemical substance control company 57, the outsourcing company 58 can collect the material composition information before the purchased material is delivered to the chemical substance control company 57 and offer the collected information to the chemical substance control company 57. In this way, it is possible to previously search for necessary information in the database.

The foregoing system provides the advantage of allowing the chemical substance control company 57 from searching for necessary information in the database maintained by the outsourcing company 58. Thus, the outsourcing company can charge a higher fee for service to the chemical substance control company 57 than in the case of the business explained in (1) above.

Since the chemical substance control company 57 can find necessary information beforehand, it can ask the product maker and apparatus maker for information if it finds that necessary information is not in the database maintained by the outsourcing company 58.

The business in this service consists of the chemical substance control company (A), the outsourcing company (B), and the product/apparatus maker (C). The chemical substance control company (A) provides to the outsourcing company information about the material to be purchased (ordered). The advantage of this is that the outsourcing company (B) can collect only necessary information about the product (commodity) delivered to the chemical substance control company (A). Because of this service, the outsourcing company can expect more service fee from the chemical substance control company (A) than in the case of (1) above. Because the outsourcing company (B) can get information about the purchased goods beforehand, it has enough time to collect information before the chemical substance control company utilizes the information. In the case where purchased goods are delivered for which the apparatus/product maker (C) has not yet made information open to the public, it is possible to ask the apparatus/ product maker (C) to make the product composition information open to the public. This helps the outsourcing company (B) to improve its service. The product/apparatus maker (C) receives part of the value paid for service to the outsourcing company (B) from the chemical substance control company (A), so that it actively opens the product information to the public, thereby obtaining income from information publicity. In this way, all of the chemical substance control company (A), the outsourcing company (B), and the product/apparatus maker (C) get benefits for business.

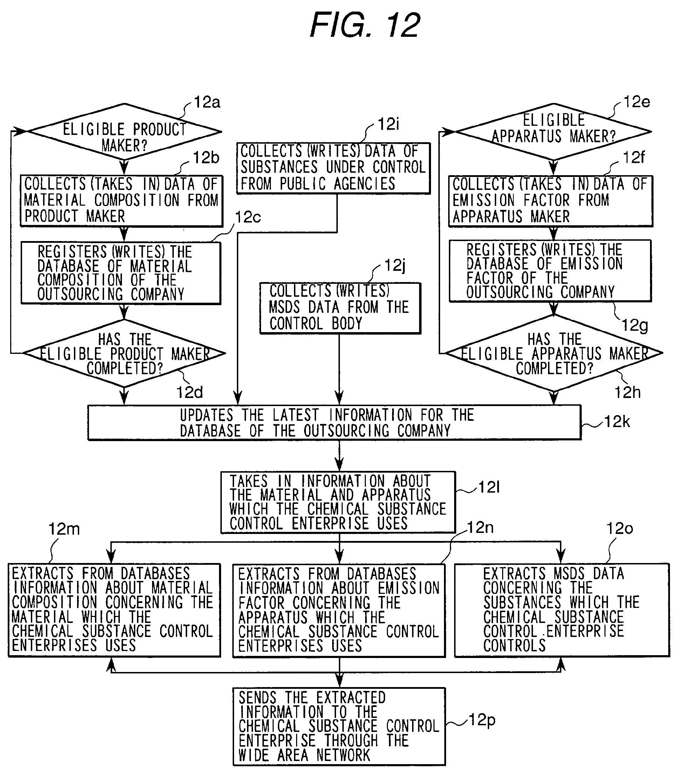

Fig. 12 is a flow diagram of the business of offering databases (with filtering of information exhibit). Steps 12a to 12l in the flow shown in Fig. 12 are the same as those explained in Fig. 10. Then, the information of the database in the outsourcing company 58 has been updated (12l), the outsourcing company 58 takes in the material information and apparatus information which the chemical substance control company 57 uses. (12m).

On the basis of the material information and apparatus information taken in, the outsourcing company 58 extracts from the material composition database 58a of the outsourcing company 58 the material composition information concerning the material which the chemical substance control company 57 uses. (12n) The outsourcing company 58 sends the extracted information to the chemical substance control company 57 through the wide area network.

Alternatively, the outsourcing company 58 extracts from the emission factor database 58a of the outsourcing company 58 the emission factor information concerning the apparatus which the chemical substance control company 57 uses. (12o) The outsourcing company 58 sends the extracted information to the chemical substance control company 57 through the wide area network.

Alternatively, the outsourcing company 58 extracts from the MSDS database maintained by the control body 56 the data of substances under control which the chemical substance control company 57 needs. (12p) The outsourcing company 58 sends the extracted information to the chemical substance control company 57 through the wide area network.

### (3) To offer green acquisition information

In the comprehensive management of chemical substances, not only is it necessary to periodically control the amount of discharge of chemical substances to be controlled, but it is also necessary to improve the business from the standpoint of reducing the amount of discharge of chemical substances to be controlled. This object is achieved by reducing the consumption of the chemical substance to be controlled or by using a substitute which contains less amount of the chemical substance to be controlled. An example of the business form is:
(i) to offer service of introducing the substitute (green acquisition information) and to offer service of simulation to estimate how much of the chemical substances to be controlled is reduced by the use of substitute.
(ii) consultation for the use of purchased material containing chemical substances to be controlled in the production process and consultation for the use of the purchased material in different ways.
(iii) consultation for change of the existing apparatus used in the production process into the new one which emits less chemical substances.

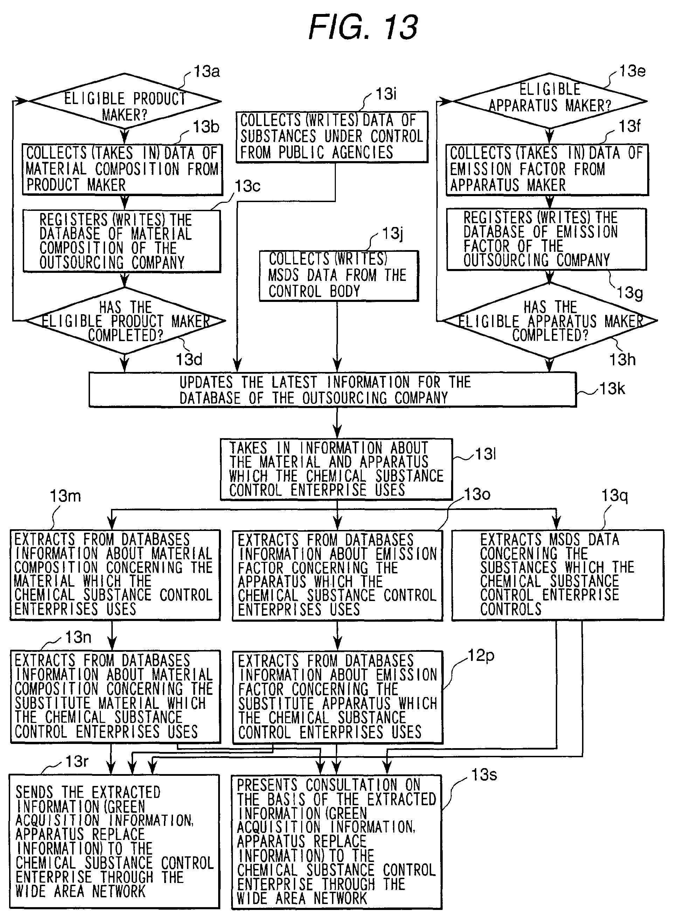

This service is offered by the outsourcing company 58 to the chemical substance control company 57. The chemical substance control company 57 can expect the effect of reducing the chemical substances in accordance with the advice from the outsourcing company 58. And the outsourcing company 58 asks the chemical substance control company 57 for the service fee. The product maker and apparatus maker send information about the substitute (green acquisition information) to the outsourcing company 58, thereby increasing the chances of the chemical substance control company 57 from purchasing the substitute from the product maker and apparatus maker. Fig. 13 is a flow diagram of the business of offering the green acquisition information. Steps 13a to 13k in the flow shown in Fig. 13 are the same as those explained in Fig. 10. After the information of the database in the outsourcing company 58 has been updated (13k), the outsourcing company 58 takes in the material information and apparatus information which the chemical substance control company 57 uses (13l).

The outsourcing company 58 extracts from the material composition database 58a maintained by the outsourcing company 58 the material composition information concerning the material which the chemical substance control company 57 uses (13m). The outsourcing company 58 extracts from the material composition database 58a maintained by the outsourcing company 58 the other's material composition information which substitutes the material information which the chemical substance control company 57 uses (13n). The outsourcing company 58 sends the extracted information (the green acquisition information and apparatus replacement information) to the chemical substance control company 57 through the wide area network (13r). On the basis of the extracted information, the outsourcing company 58 also carries out consulting for the chemical substance control company 57 through the wide area network. (13s)

Alternatively, the outsourcing company 58 extracts from the emission factor database 58b maintained by the outsourcing company 58 the emission factor information concerning the apparatus which the chemical substance control company 57 uses (13o). The outsourcing company 58 extracts from the emission factor database 58b maintained by the outsourcing company 58 the other's emission factor information which substitutes the emission factor information which the chemical substance control company 57 uses (13p). The outsourcing company 58 sends the extracted information (the green acquisition information and apparatus replacement information) to the chemical substance control company 57 through the wide area network (13r).

Alternatively, on the basis of the extracted information, the outsourcing company 58 provides consultation to the chemical substance control company 67 through the wide area network (13s). Also, the outsourcing company 58 extracts from the database concerning substances under control maintained by public agencies the data of substances under control which is applied to the chemical substance control company 57, or the outsourcing company 58 extracts MSDS data from the MSDS database 56a maintained by the control body 56 (13q). On the basis of the extracted information, the outsourcing company 58 also carries out consulting for the chemical substance control company 57 through the wide area network (13r, 13s).

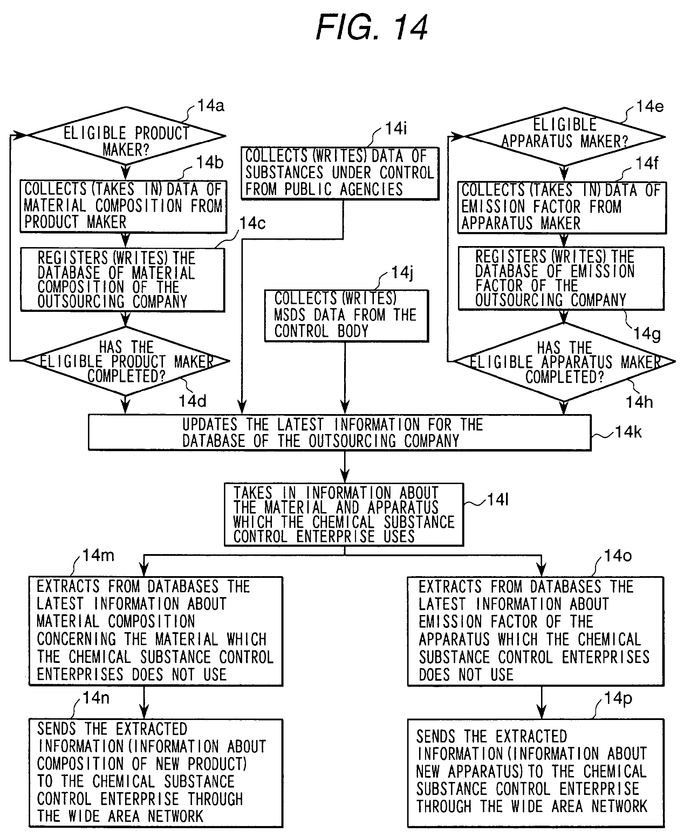

Fig. 14 is a flow diagram of the business of offering (advertising) the new product information and new apparatus information, as a development of the business shown in Fig. 13. Steps 14a to 14k in the flow shown in Fig. 14 are the same as those explained in Fig. 10. After the information of the database in the outsourcing company 58 has been updated (14k), the outsourcing company 58 takes in the material information and apparatus information which the chemical substance control company 57 uses (14l).

The outsourcing company 58 extracts from the material composition database 58a, maintained by the outsourcing company 58, the latest material composition information concerning the material which the chemical substance control company 57 does not use (14m). The outsourcing company 58 sends the extracted information (information about composition of the new product) to the chemical substance control company 57 through the wide area network (14n).

Alternatively, the outsourcing company 58 extracts from the emission factor database 58b maintained by the outsourcing company 58 the latest emission factor information concerning the apparatus which the chemical substance control company 57 does not use (14o). The outsourcing company 58 sends the extracted information (information about the new apparatus) to the chemical substance control company 57 through the wide area network (14p).

### (4) Providing the chemical substance control business for others

The chemical substance control company 57 is originally required to control the chemical substances discharged, the point of discharge and transfer, and the amount of discharge. Here, the outsourcing company 58 provides the business of chemical substance control for the chemical substance control company 57.

The operation of chemical substance control consists of recording and calculating the name and amount of the material purchased by the chemical substance control company 57, the name and amount of the material used in each process (work) by the chemical substance control company 57, and the amount and the point of discharge (into atmosphere and waters) and transfer (shipped as finished product). The control information is compiled into a report of specified format. The outsourcing company 58 submits the report to public agencies on behalf of the chemical substance control company 57.

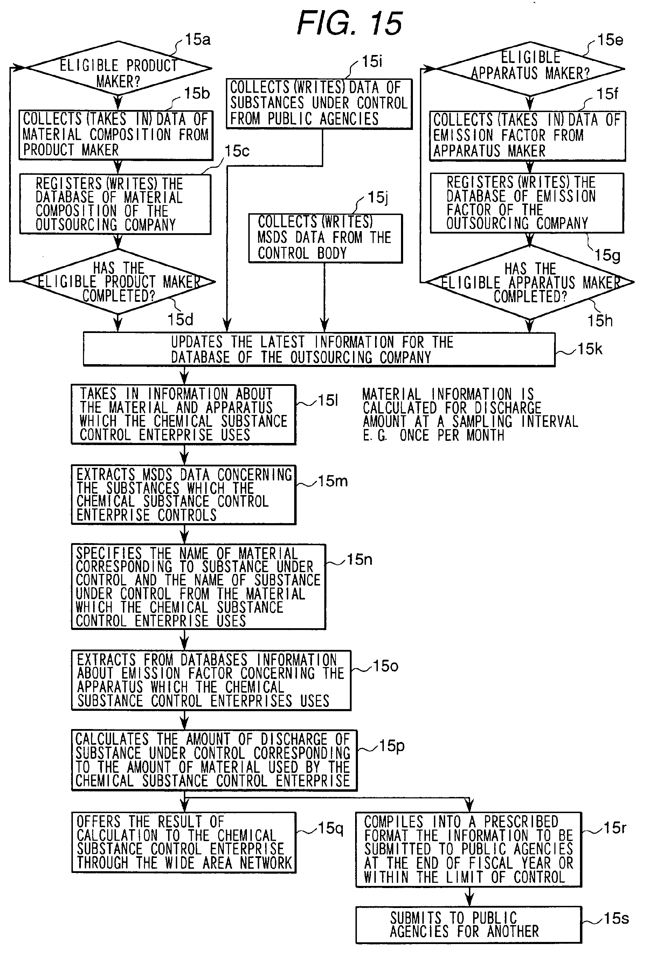

Fig. 15 is a flow diagram of the vicarious execution of chemical substance control operation. Steps 15a to 15k in the flow shown in Fig. 15 are the same as those explained in Fig. 10. After the information of the database in the outsourcing company 58 has been updated (15k), the outsourcing company 58 takes in the material information and apparatus information which the chemical substance control company 57 uses (14l).

The outsourcing company 58 extracts from the database concerning substances under control maintained by public agencies the data of substances under control which is applied to the chemical substance control company 57, and the outsourcing company 58 extracts MSDS data from the MSDS database 56a maintained by the control body 56 (15m). Next, the outsourcing company 58 specifies, from the material used by the chemical substance control company 57, the name of the substance corresponding to the substance under control and the name of the substance under control (15n). Then, the outsourcing company 58 extracts, from the emission factor database 58b maintained by the outsourcing company 58, the emission factor information concerning the information of the apparatus used by the chemical control company 57 (15o). Next, the outsourcing company 58 calculates the amount of discharge of the substance under control corresponding to the amount of the material used by the chemical substance control company 57 (15p), and submits the results of calculations to the chemical substance control company 57 through the wide area network (15q). The results of calculations are compiled into a document of specified format to be submitted to public agencies at the end of the fiscal year or the limit of control (15r). The report compiled into the specified format is submitted to the public agencies that have jurisdiction (15s).

### (5) Cutback judgment and cutback judgment report

Whether or not a business establishment is obliged to submit a report depends of the kind of business, the scale of business (in terms of the number of employees), and the handling amount of legally controlled substances and the toxicity rank of the substance. Particularly, regarding the handling amount of legally controlled substances and the toxicity rank substance, it is necessary to control to see whether or not a report is necessary. Even though the amount is without the responsibility of report, it is the obligation of the companyr to reduce the amount of use and to use substitutes so long as it uses the substances to be regulated. Thus, there is a need of controlling chemical substances. In other words, it is necessary to control chemical substances in order to make judgment for cutback of the handling amount of chemical substances. The cutback report contains information about the control of chemical substances to be carried out to make judgment for cutback.

There is a business form to judge whether or not the chemical substance control company 57 is an company which is obliged to submit a report. The processing flow of this business form is shown in Fig. 15. Process 15p calculates the amount of discharge of substance under control corresponding to the amount of material used by the chemical substance control company 57. After this process, on the basis of the results of calculations, judgment is made whether or not the chemical substance control company 57 is an company which is obliged to submit a report. The result of judgment is offered to the chemical substance control company 57.

### (6) Monitoring of process state (information about the state of use of chemical substances)

In controlling chemical substances, it is essential to confirm the amount of consumption of the material including chemical substances. There are several ways of specifying the amount of consumption of materials. First, (i) to control chemical substances on the assumption that the amount of materials purchased is equal to the amount of materials actually consumed, second (ii) to control chemical substances by assessing the difference between the amount of materials purchased and the amount of the inventory and third (iii) to control chemical substances by measuring the amount of materials actually consumed.

The first object (i) can be realized if it is possible to periodically obtain information about material purchase or information about material acceptance. The second object (ii) can be realized if it is possible to obtain, in addition to information about material purchase or information about material acceptance, information about inventory. The third object (iii) is intended to measure the amount actually consumed in production (or the amount of material introduced into or discharged from the tank) by using a measuring apparatus, and utilize the resulting data for the control of chemical substances.

The monitoring of process state obtains the information of (i) to (iii) mentioned above from the chemical substance control company and totalizes the chemical substances. The method of obtaining the above-mentioned information from the chemical substance control company is through exchange of information through the wide area network.

As for the source of information, there are two possibilities. First (i) a method of entering information in the web system by human and thereby obtaining information and second (ii) by exchanging data through communication with the computer system to control the above-mentioned information.

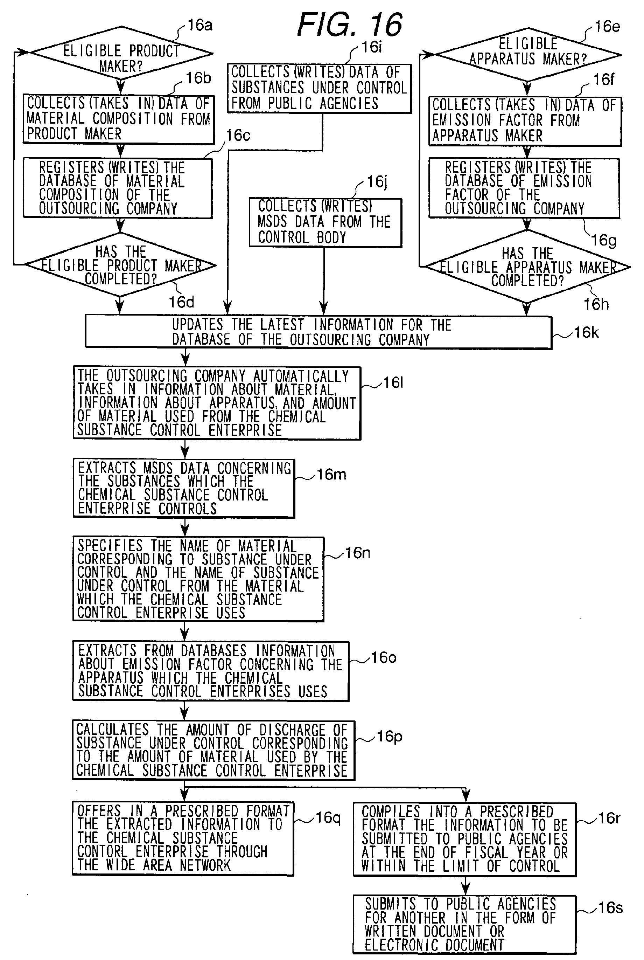

Fig. 16 is a flow diagram of business form to monitor the process state (information about the state of use of chemical substances). Steps 16a to 16k in the flow shown in Fig. 16 are the same as those explained in Fig. 10.

After the information of the database in the outsourcing company 58 has been updated (16k), the outsourcing company 58 automatically takes in the material information and apparatus information and the amount of material used from the chemical substance control company 57 (16l). This step may be carried out in a prefixed sampling period, for example, once a month, to calculate the amount of discharge. The cycle of this step is arbitrary.

The outsourcing company 58 extracts from the database concerning substances under control maintained by public agencies the data of substances under control which is applied to the chemical substance control company 57, and the outsourcing company 58 extracts MSDS data from the MSDS database 56a maintained by the control body 56 (16m).

Then, the outsourcing company 58 specifies, from the material used by the chemical substance control company 57, the name of the substance corresponding to the substance under control and the name of the substance under control (16n). Next, the outsourcing company 58 extracts, from the emission factor database 58b maintained by the outsourcing company 58, the emission factor information concerning the information of the apparatus used by the chemical control company 57 (16o). Then, the outsourcing company 58 calculates the amount of discharge of the substance under control corresponding to the amount of the material used by the chemical substance control company 57 (16p). The outsourcing company 58 submits the results of calculations to the chemical substance control company 57 through the wide area network (16q). The results of calculations are compiled into a document of specified format to be submitted to public agencies at the end of the fiscal year or the limit of control (16r). The report compiled into the specified format is submitted to the public agencies which have jurisdiction (16s).

### (7) Consultation for reduction of chemical substances (advice for replacement of chemical substances, renovation of business, and replacement of apparatus).

In the control of chemical substances, not only is it necessary to assess the amount of discharge and transfer of the chemical substances, but it is also necessary to reduce the amount of discharge of the chemical substances. The methods of reducing the amount of chemical substances used include: (i) substitution of the material used; (ii) innovation of the production process to reduce the amount of discharge; and (iii) improvement of apparatus efficiency and replacement by efficient apparatus to reduce the amount of discharge. Hence, there is a need for consultation to assist in the reduction of chemical substances. This consultation is accomplished on the basis of the results of calculations obtained in step 16p in Fig. 16 showing the process of the business form.

### (8) Alarming service (automatic issue of control trend alarm)

The outsourcing company 58 controls the state of discharge of chemical substances of the chemical substance control company 57 (which is its customer). It also obtains information about the purchase and use of materials by the chemical substance control company 57, so that it can assess the current state of the discharge of chemical substances in the chemical substance control company 57.

For example, if the actual value of the previous year is exceeded or if the target of self-imposed control is established, whether or not the current value is larger or smaller than the target is judged timely, and an alarm or message is sent to the chemical substance control company 57 as the customer.

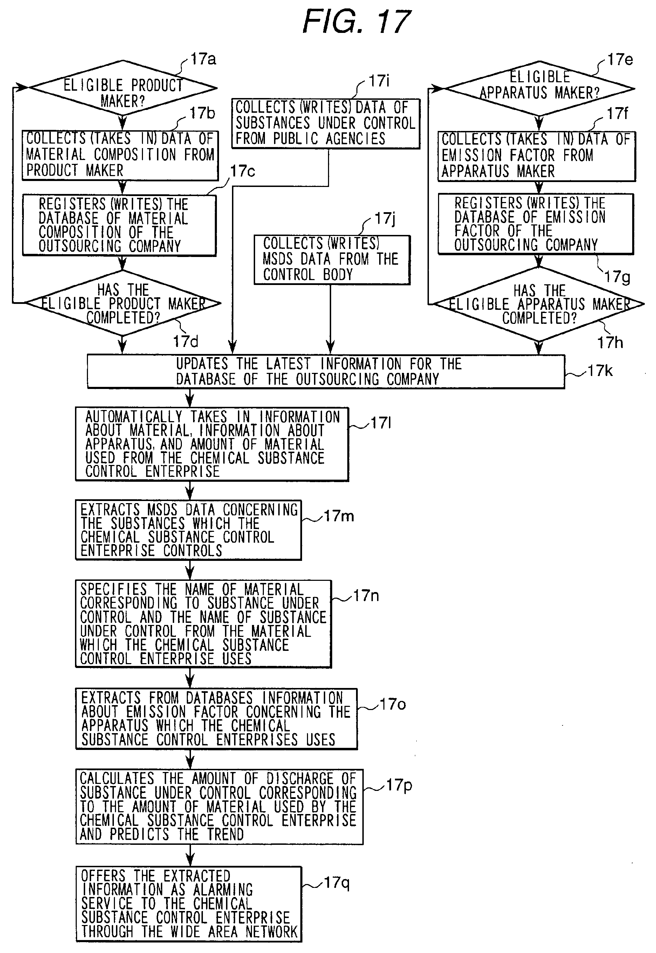

Fig. 17 is a flow diagram of a business form for an alarm service (automatic issue of control trend). Steps 17a to 17k in the flow shown in Fig. 17 are the same as those explained in Fig. 10. After the information of the database in the outsourcing company 58 has been updated (17k), the outsourcing company 58 automatically takes in the material information and apparatus information and the amount of material used from the chemical substance control company 57 (17l). This step may be carried out in a prefixed sampling period, for example, once a month, to calculate the amount of discharge. The cycle of this step is arbitrary.

The outsourcing company 58 extracts from the database 55a concerning substances under control maintained by public agencies 55 the data of substances under control which is applied to the chemical substance control company 57, and the outsourcing company 58 extracts MSDS data from the MSDS database 56a maintained by the control body 56 (17m). Next, the outsourcing company 58 specifies, from the material used by the chemical substance control company 57, the name of the substance corresponding to the substance under control and the name of the substance under control (17n). Then, the outsourcing company 58 extracts, from the emission factor database 58b maintained by the outsourcing company 58, the emission factor information concerning the information of the apparatus used by the chemical control company 57 (17o). Next, the outsourcing company 58 calculates the amount of discharge of substances under control corresponding to the amount of materials consumed by the chemical substance control company 57, thereby predicting the trend (17p). The prediction of trend is accomplished by periodically the result of calculations of the amount of discharge of substances under control and predicting the accumulated value of the discharge of substances under control in the near future. The outsourcing company 58 then submits to the chemical substance control company 57 the information about trend and the margin to accomplish the self-imposed amount of substances under control. Next, the outsourcing company 58 submits the results of the calculations to the chemical substance control company 57 through the wide area network.

### (9) Product retrieval

It is expected that there will be a huge number of data in the product information (material composition information) of the product maker and the emission factor information of apparatus of the apparatus maker. The service of the outsourcing company 58 will be poor if such data are not retrieved easily by the chemical substance control company. Therefore, there is a need for business of product retrieval or business to find necessary information easily from information according to maker, kind, product number, commodity name, and bar code.

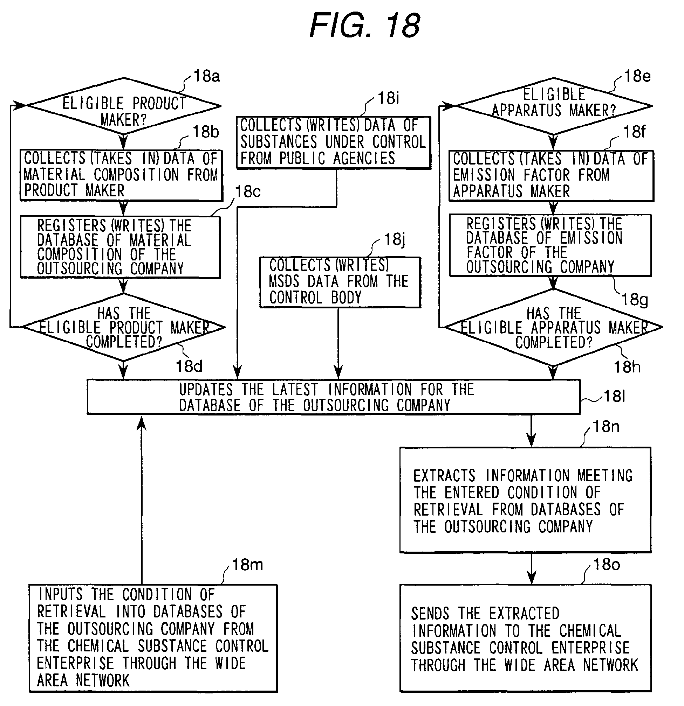

Fig. 18 is flow diagram of business form for product retrieval. Steps 18a to 18k in the flow shown in Fig. 18 are the same as those explained in Fig. 10. After the information of the database in the outsourcing company 58 has been updated (18l), the chemical substance control company 57 enters the condition for retrieval to the databases of the outsourcing company 58 through the wide area network (18m). The outsourcing company 58 starts retrieval in the databases according to the condition for retrieval and extracts corresponding information (18n). Next, the outsourcing company 58 submits the extracted information to the chemical substance control company 57 through the wide area network.

Hence, the present invention provides a method and system for management of chemical materials by a company comprising providing a first data set containing which substances comprise the materials, providing a second data set containing which of the substances are to be controlled and providing a third data set containing a ratio of discharge of the controlled substances in a process. The method further provides analyzing a preset amount of the materials in the process and determining a quantity of the controlled substances utilizing the first and second data set and determining an emissions quantity of the controlled substances utilizing the ratio and the quantity of the controlled substances, wherein the data sets are provided by an outsource company through a network.

Although the invention has been described above in connection with exemplary embodiments, it is apparent that many modifications and substitutions can be made without departing from the spirit or scope of the invention. Accordingly, the invention is not to be considered as limited by the foregoing description, but is only limited by the scope of the appended claims as interpreted by the description and drawings.

## Claims

1. A method for management of chemical materials by a company comprising the steps of:
providing a first data set containing which substances comprise said materials;
providing a second data set containing which of said substances are to be controlled;
providing a third data set containing a ratio of discharge of said controlled substances in a process;
analyzing a preset amount of said materials in said process and determining a quantity of said controlled substances utilizing said first and second data set;
determining an emissions quantity of said controlled substances utilizing said ratio and said quantity of said controlled substances; and
wherein said data sets are provided by an outsource company through a network.

2. The method of claim 1 wherein said steps of analyzing and determining is performed by said outsource company.

3. The method of claim 2 further comprising the step of providing information to said company by said outsource company whether said company is required to submit a report to a public agency.

4. The method of claim 3 further comprising the step of preparing a report of said emission quantity by said outsource company for said company to submit to said public agency.

5. The method of claim 4 further comprising the step of submitting said report to said public agency by said outsource company for said company.

6. The method of claim 2 further comprising the step of providing information to said company by said outsource company to reduce the amount of said emission quantity.

7. The method of claim 2 further comprising the step of providing information to said company by said outsource company whether said emission quantity exceeds a legal limit for said controlled substances.

8. The method of claim 1 further comprising the step of providing a fourth data set containing handling precautions, hazards and legal regulations for said materials by said outsource company.

9. A method for management of chemical materials by a company comprising the steps of:
providing a first data set containing which substances comprise said materials;
providing a second data set containing which of said substances are to be controlled;
providing a third data set containing a ratio of discharge of said controlled substances in a process;
analyzing a preset amount of said materials in said process and determining a quantity of said controlled substances utilizing said first and second data set by an outsource company;
determining an emissions quantity of said controlled substances utilizing said ratio and said quantity of said controlled substances by said outsource company; and
wherein said data sets are provided by said outsource company through a network.

10. The method of claim 9 further comprising the step of providing information to said company by said outsource company whether said company is required to submit a report to a public agency.

11. The method of claim 10 further comprising the step of preparing a report of said emission quantity by said outsource company for said company to submit to said public agency.

12. The method of claim 11 further comprising the step of submitting said report to said public agency by said outsource company for said company.

13. The method of claim 9 further comprising the step of providing information to said company by said outsource company to reduce the amount of said emission quantity.

14. The method of claim 9 further comprising the step of providing information to said company by said outsource company whether said emission quantity exceeds a legal limit for said controlled substances.

15. The method of claim 9 further comprising the step of providing a fourth data set containing handling precautions, hazards and legal regulations for said materials by said outsource company.

16. A method for management of chemical materials by a company comprising the steps of:
providing a first data set containing which substances comprise said materials;
providing a second data set containing which of said substances are to be controlled;
providing a third data set containing a ratio of discharge of said controlled substances in a process;
providing a fourth data set containing handling precautions, hazards and legal regulations for said materials;
analyzing a preset amount of said materials in said process and determining a quantity of said controlled substances utilizing said first and second data set by an outsource company;
determining an emissions quantity of said controlled substances utilizing said ratio and said quantity of said controlled substances by said outsource company; and
wherein said data sets are provided by said outsource company through a network.

17. The method of claim 16 further comprising the step of providing information to said company by said outsource company whether said company is required to submit a report to a public agency.

18. The method of claim 17 further comprising the step of preparing a report of said emission quantity by said outsource company for said company to submit to said public agency.

19. The method of claim 18 further comprising the step of submitting said report to said public agency by said outsource company for said company.

20. The method of claim 16 further comprising the step of providing information to said company by said outsource company to reduce the amount of said emission quantity.

21. The method of claim 16 further comprising the step of providing information to said company by said outsource company whether said emission quantity exceeds a legal limit for said controlled substances.

22. A system for management of chemical materials discharged by a company comprising:
a server comprising:
a first data set containing which substances comprise said materials;
a second data set containing which of said substances are to be controlled, said substances being categorized by a group control number;
a third data set containing a ratio of discharge of said controlled substances in a process;
said server being in communication with a processor, said processor being programmed to:
analyze a preset amount of said materials in said process and determining a quantity of said controlled substances utilizing said first and second data sets;
determine an emissions quantity of said controlled substances utilizing said ratio and said quantity of said controlled substances; and
wherein said data sets in said server are provided by an outsource company through a network.

23. The system of claim 22 wherein said programming for said processor is performed by said outsource company.

24. The system of claim 23 wherein said processor is further programmed to provide information to said company by said outsource company whether said company is required to submit a report to a public agency.

25. The system of claim 24 wherein said processor is further programmed to prepare a report of said emission quantity by said outsource company for said company to submit to said public agency.

26. The system of claim 25 wherein said processor is further programmed to submit said report to said public agency by said outsource company for said company.

27. The system of claim 23 wherein said processor is further programmed to provide information to said company by said outsource company to reduce the amount of said emission quantity.

28. The system of claim 23 wherein said processor is further programmed to provide information to said company by said outsource company whether said emission quantity exceeds a legal limit for said controlled substances.

29. The system of claim 22 further comprising a fourth data set containing handling precautions, hazards and legal regulations for said materials by said outsource company.

30. A system for management of chemical materials discharged by a company comprising:
a server comprising:
a first data set containing which substances comprise said materials;
a second data set containing which of said substances are to be controlled, said substances being categorized by a group control number;
a third data set containing a ratio of discharge of said controlled substances in a process;
said server being in communication with a processor, said processor being programmed by an outsource company to:
analyze a preset amount of said materials in said process and determining a quantity of said controlled substances utilizing said first and second data sets;
determine an emissions quantity of said controlled substances utilizing said ratio and said quantity of said controlled substances; and
wherein said data sets in said server are provided by an outsource company through a network.

31. The system of claim 30 wherein said processor is further programmed to provide information to said company by said outsource company whether said company is required to submit a report to a public agency.

32. The system of claim 31 wherein said processor is further programmed to prepare a report of said emission quantity by said outsource company for said company to submit to said public agency.

33. The system of claim 32 wherein said processor is further programmed to submit said report to said public agency by said outsource company for said company.

34. The system of claim 30 wherein said processor is further programmed to provide information to said company by said outsource company to reduce the amount of said emission quantity.

35. The system of claim 30 wherein said processor is further programmed to provide information to said company by said outsource company whether said emission quantity exceeds a legal limit for said controlled substances.

36. The system of claim 30 further comprising a fourth data set containing handling precautions, hazards and legal regulations for said materials by said outsource company.

37. A system for management of chemical materials discharged by a company comprising:
a server comprising:
a first data set containing which substances comprise said materials;
a second data set containing which of said substances are to be controlled, said substances being categorized by a group control number;
a third data set containing a ratio of discharge of said controlled substances in a process;
a fourth data set containing handling precautions, hazards and legal regulations for said materials;
said server being in communication with a processor, said processor being programmed by an outsource company to:
analyze a preset amount of said materials in said process and determining a quantity of said controlled substances utilizing said first and second data sets;
determine an emissions quantity of said controlled substances utilizing said ratio and said quantity of said controlled substances; and
wherein said data sets in said server are provided by an outsource company through a network.

38. The system of claim 37 wherein said processor is further programmed to provide information to said company by said outsource company whether said company is required to submit a report to a public agency.

39. The system of claim 38 wherein said processor is further programmed to prepare a report of said emission quantity by said outsource company for said company to submit to said public agency.

40. The system of claim 39 wherein said processor is further programmed to submit said report to said public agency by said outsource company for said company.

41. The system of claim 37 wherein said processor is further programmed to provide information to said company by said outsource company to reduce the amount of said emission quantity.

42. The system of claim 38 wherein said processor is further programmed to provide information to said company by said outsource company whether said emission quantity exceeds a legal limit for said controlled substances.

43. A method for management of chemical materials by a company comprising the steps of:
providing a first data set containing substances which comprise said materials;
providing a second data set containing substances which are to be controlled;
providing a third data set containing a ratio of discharge of said controlled substances in a process, wherein said ratio is maintained on an apparatus used in the process;
analyzing a preset amount of said materials in said process and determining a quantity of said controlled substances utilizing said first and second data set; and
determining an emissions quantity of said controlled substances utilizing said ratio and said quantity of said controlled substances.
